# EUROPÄISCHE PATENTSCHRIFT

(11) **EP 1 483 276 B1**
(45) Veröffentlichungstag und Bekanntmachung des Hinweises auf die Patenterteilung: **31.08.2005**
(21) Anmeldenummer: 03708207.0
(22) Anmeldetag: 10.03.2003
(51) Int. Cl.: C07F 17/02, B01J 31/00

(54) **FERROCENYLLIGANDEN UND IHRE VERWENDUNG IN DER KATALYSE**
FERROCENYL LIGANDS AND THE USE THEREOF IN CATALYSIS
LIGANDS FERROCENYLES ET LEUR UTILISATION EN CATALYSE

(30) Priorität: 13.03.2002 DE 10211250
(43) Veröffentlichungstag der Anmeldung: 08.12.2004
(73) Patentinhaber: Degussa AG, 40474 Düsseldorf (DE)
(72) Erfinder: KNOCHEL, Paul, 81475 München (DE); LOTZ, Matthias, 4054 Basel (CH); MONSEES, Axel, 60487 Frankfurt (DE); RIERMEIER, Thomas, 65439 Flörsheim (DE); KADYROV, Renat, 65931 Frankfurt (DE); ALMENA PEREA, Juan José, 63450 Hanau (DE)
(86) Internationale Anmeldenummer: PCT/EP2003/002429
(87) Internationale Veröffentlichungsnummer: WO 2003/076451

(56) Entgegenhaltungen:
- US-A- 5 856 540
- LOTZ, MATTHIAS ET AL: "Facile axial chirality control by using a precursor with central chirality. Application to the preparation of new axially chiral diphosphine complexes for asymmetric catalysis" CHEMICAL COMMUNICATIONS (CAMBRIDGE, UNITED KINGDOM) (2002), (21), 2546-2547 , 2002, XP002244213

## Beschreibung

Die Erfindung betrifft bidentate Organophosphor-Ferrocenylliganden, deren Komplexverbindungen sowie deren Verwendung in katalytischen Prozessen.

Trisubstituierte Organophosphorverbindungen haben große Bedeutung als Liganden in der homogenen Katalyse. Durch Variation der Substituenten am Phosphor in solchen Verbindungen lassen sich die elektronischen und sterischen Eigenschaften des Phosphorliganden gezielt beeinflussen, so dass Selektivität und Aktivität bei homogen-katalytischen Prozessen gesteuert werden können.

Die Bedeutung der bisher bekannten Phosphorliganden spiegelt sich in deren Strukturvielfalt wieder. Die Gliederung der Liganden kann beispielsweise nach Stoffklassen erfolgen. Beispiele für solche Stoffklassen sind Trialkyl- und Triarylphosphine, Phosphite, Phosphinite, Phosphonite, Aminophosphane usw. Diese Einteilung nach Stoffklassen ist insbesondere nützlich, um die elektronischen Eigenschaften eines Liganden zu beschreiben.

Darüber hinaus ist eine Klassifizierung von Phosphorliganden nach ihren Symmetrieeigenschaften oder nach der Zähnigkeit der Liganden möglich. Diese Strukturierung trägt insbesondere der Stabilität, Aktivität und potentiellen Stereoselektivität von Metallkomplexen mit Phosphorliganden als Katalysatorvorstufen oder Katalysatoren Rechnung.

Neben den weit verbreiteten C₂-symmetrischen bidentaten Ligandsystemen wie DUPHOS, DIOP, BINAP oder DEGUPHOS rücken unsymmetrische bidentate Organophosphorliganden immer mehr in den Fokus bei der Konzeption neuer asymmetrischer Katalyseverfahren. Wichtige Beispiele sind die große Klasse der vielseitig einsetzbaren chiralen Ferrocenylphosphinliganden wie z.B. JOSIPHOS, die Aminophosphin-Phosphinitliganden wie PINDOPHOS oder DPAMPP, die besonders in der asymmetrischen Hydrierung von Olefinen erfolgreich eingesetzt werden, oder die Phosphin-Phosphit-Liganden wie BINAPHOS oder BIPHEMPHOS, die in der asymmetrischen Hydroformylierung von Olefinen Verwendung finden. Ein wichtiger Aspekt des Erfolges dieser Verbindungsklassen wird der Schaffung einer besonders asymmetrischen Umgebung des Metallzentrums durch diese Ligandsysteme zugeschrieben.

US-A-5 856 540 offenbart Organophosphor - Ferrrocenylliganden. deren Komplexverbindungen sowie deren Verwendung in asymmetrischen Katalyse verfahren.

Dies zeigt, dass bei der Verbesserung katalytischer Prozesse die Entwicklung neuer Liganden eine entscheidende Rolle spielt. Aus diesem Grund besteht weiterhin ein Bedarf an neuen enantiomerenangereicherten chirale Liganden, deren elektronische und stereochemischen Eigenschaften sich auf das jeweilige Katalyseproblem optimal abstimmen lassen.

Somit liegt der Erfindung die Aufgabe zugrunde chirale Liganden zur Verfügung zu stellen, die sich stereochemisch und elektronisch variieren lassen, um den für eine bestimmte asymmetrische Katalyse optimalen maßgeschneiderten Liganden bereitstellen zu können.

Die vorliegende Erfindung beschreibt neuartige, unsymmetrische, bidentate und chirale Phosphorligandsysteme, die in einzigartiger Weise die oben angeführten wichtigsten Merkmale für effektive asymmetrische Induktion in sich vereinigen. Ein besonderer Vorteil ist hierbei, daß sie eine hochasymmetrische Koordinationssphäre mit unabhängig voneinander modifizierbaren Organophosphordonoren schaffen.

Die vorliegende Erfindung betrifft daher unsymmetrische bidentate Organophosphorliganden der Formel (I) mit zwei trivalenten Phosphorgruppen, die über eine Ferrocenyleinheit miteinander verbunden sind. 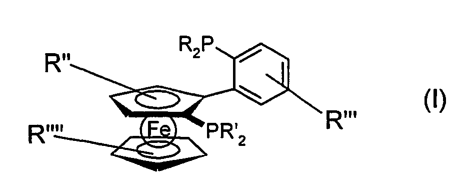 worin
- R, R': unabhängig voneinander für jeden der beiden Substituenten R oder R' einen Rest ausgewählt aus der Gruppe C₁-C₂₄ Alkyl, C₂-C₂₄ Alkenyl, C₃-C₈ Cycloalkyl, C₃-C₈ Cycloalkenyl, C₆-C₁₄ Aryl, Phenyl, Naphthyl, Fluorenyl, Furfuryl, 1-Adamantyl, C₂-C₁₃ Heteroaryl, wobei die Zahl der Heteroatome, insbesondere aus der Gruppe N, O, S, 1-4 betragen kann, wobei die cyclischen aliphatischen oder aromatischen Reste bevorzugt 5 bis 7 gliedrige Ringe sind, darstellen können und bei denen die genannten Substituenten R und R' jeweils ein- oder mehrfach substituiert sein können, wobei diese Substituenten unabhängig voneinander aus der Gruppe C₁-C₁₂ Alkyl, C₂-C₁₂ Alkenyl, C₁-C₁₀ Haloalkyl, C₃-C₈ Cycloalkyl, C₃-C₈ Cycloalkenyl, C₂-C₉ Heteroalkyl, C₁-C₉ Heteroalkenyl, C₆-C₁₄Aryl, Phenyl, Naphthyl, Fluorenyl, C₂-C₇ Heteroaryl, wobei die Zahl der Heteroatome, insbesondere aus der Gruppe N, O, S, 1-4 betragen kann, C₁-C₁₀ Alkoxy, C₁-C₉ Trihalomethylalkyl, Trifluormethyl, Trichlormethyl, Fluoro, Chloro, Hydroxy, C₁-C₈ substituierte Amino der Formen mono-, di-, tri-C₁-C₈-Alkylamino oder C₂-C₈ Alkenylamino oder mono-, di-, tri- C₆-C₈ Arylamino oder Carboxyl, Carboxylato der Form COOR"", wobei R"" ein einwertiges Kation oder ein C₁-C₈ Alkyl darstellt, C₁-C₈-Acyloxy, Tri- C₁-C₆ Alkylsilyl, ausgewählt werden können, und wobei zwei dieser Substituenten auch verbrückt sein können und worin
- R", R"', R"": unabhängig voneinander für jeden Substituenten R", R"' oder R"" einen Rest ausgewählt aus der Gruppe Wasserstoff, C₁-C₂₄ Alkyl, C₂-C₂₄ Alkenyl, C₃-C₈ Cycloalkyl, C₃-C₈ Cycloalkenyl, C₁-C₁₀ Alkoxy, C₁-C₉ Trihalomethylalkyl, Trifluormethyl, Trichlormethyl, Fluoro, Chloro, Hydroxy, C₁-C₈ substituierte Amino der Formen mono-, di-, tri- C₁-C₈-Alkylamino oder C₂-C₈ Alkenylamino oder mono-, di-, tri- C₆-C₈ Arylamino oder Carboxyl, Carboxylato der Form COOR'"", wobei R'"" ein einwertiges Kation oder ein C₁-C₈ Alkyl darstellt, C₁-C₈-Acyloxy, Tri- C₁-C₆ Alkylsilyl, darstellen können, und wobei zwei dieser Substituenten auch verbrückt sein können.

In einer bevorzugten Ausführungsform kann es sich hierbei bei R oder R' unabhängig voneinander um Phenyl, Furfuryl, 3,5-Dimethylphenyl, 4-Methylphenyl, 2-Methylphenyl, 4-Methoxyphenyl, 3,5-Bis(trifluormethyl)phenyl, Cyclohexyl, tert. Butyl, n-Butyl, 2-Propyl, Ethyl, Methyl oder 1-Adamantyl handeln.

Die Erfindung betrifft ferner Komplexverbindungen, die ein derartiges, chirales Ligandsystem der Formel (I) mit mindestens einem Metall enthalten.

Bevorzugt steht
R,R, R"' und R"" unabhängig voneinander für ein bis zu 12-Atome enthaltenden Alkyl-, Alkenyl-, Haloalkyl-, Cycloalkyl-, Cycloalkenyl-, Aryl-, Heteroarylrest, wobei diese Reste jeweils ein- oder mehrfach substituiert sein können. Bevorzugt sind die Reste R,R, R"' und R"" dabei mit C₁-C₁₀ Alkyl, C₂-C₁₀ Alkenyl, C₁-C₁₀ Haloalkyl, C₃-C₈ Cycloalkyl, C₃-C₈ Cycloalkenyl, C₆-C₁₄ Aryl, C₂-C₇ Heteroaryl, C₁-C₁₀ Alkoxy, Halogeno, Hydroxy substituiert.

Aus der Gruppe der Alkylsubstituenten seien bevorzugt genannt Methyl, Ethyl, n-Propyl, 1-Methylethyl, n-Butyl, 1-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, n-Heptyl, n-Octyl, n-Nonyl, n-Decyl.

Unter den cyclischen Alkylsubstituenten sind besonders bevorzugt substituierte und unsubstituierte Cyclopentyl, Cyclohexyl, Cycloheptyl.
Als Alkenylreste seien bevorzugt Vinyl, Propenyl, Isopropenyl, 1-Butenyl, 2-Butenyl, 1-Pentenyl, 2-Pentenyl, 2-Methyl-1-butenyl, 2-Methyl-2-butenyl, 3-Methyl-1-butenyl, 1-Hexenyl, 1-Heptenyl, 2-Heptenyl, 1-Octenyl oder 2-Octenyl genannt. Unter den cyclischen Alkenylsubstituenten sind besonders bevorzugt Cyclopentenyl, Cyclohexenyl, Cycloheptenyl und Norbornyl.

Unter Arylsubstituenten in R und R' sind besonders bevorzugt Phenyl, Furfuryl, 2-Alkylphenyl, 3-Alkylphenyl, 4-Alkylphenyl, 2,6-Dialkylphenyl, 3,5-Dialkylphenyl, 3,4,5-Trialkylphenyl, 2-Alkoxyphenyl, 3-Alkoxyphenyl, 4-Alkoxyphenyl, 2,6-Dialkoxylphenyl, 3,5-Dialkoxyphenyl, 3,4,5-Triialkoxyphenyl, 3,5-Dialkyl-4-Alkoxyphenyl, 3,5-Dialkyl-4-dialkylaminophenyl, 4-Dialkylamino, wobei die vorgenannten Alkyl- und Alkoxygruppen jeweils vorzugsweise 1 bis 6 Kohlenstoffatome enthalten, 3,5-Trifluormethyl, 4-Trifluormethyl, 2-Sulfonyl, 3-Sulfonyl, 4-Sulfonyl, ein bis vierfach halogenierte Phenyl und Naphtyl. Bevorzugte Halogensubstituenten sind F, Cl, Br, I, besonders bevorzugt sind F und Cl.

Alle Haloalkyl- oder/und Haloarylgruppen weisen vorzugsweise die allgemeinen Formeln CHal₃, CH₂CHal₃, C₂Hal₅ auf, wobei Hal insbesondere für Fund Cl stehen kann. Besonders bevorzugt sind Haloalkyl- oder/und Haloarylgruppen der Formel CF₃.

Schließlich sind Ligandsysteme der Formel (I) als optisch aktive Ligandsysteme bevorzugt, bei denen ein Enantiomer angereichert ist. Besonders bevorzugt sind Ligandsysteme, bei denen die Enantiomerenanreicherung 90 %, bevorzugt 99 % übersteigt.

Die erfindungsgemäßen Liganden können anhand der im folgenden gegebenen allgemeinen Synthesebeschreibung hergestellt werden.

Im ersten Herstellungsschritt wird Ferrocen nach einer Methode von *Kagan et al. (J. Org. Chem*. **1995,** *60*, 2502) zum chiralen Ferrocenyl-sulfoxid **A** umgesetzt. Zur Einführung der aromatischen Gruppe und der ersten phosphorhaltigen Gruppe wird in Gegenwart einer Lithiumbase der Ferrocenylring lithiiert und transmetalliert. In Gegenwart eines Palladiumkatalysators findet die Kupplung zu der entsprechenden Verbindung **B** statt.

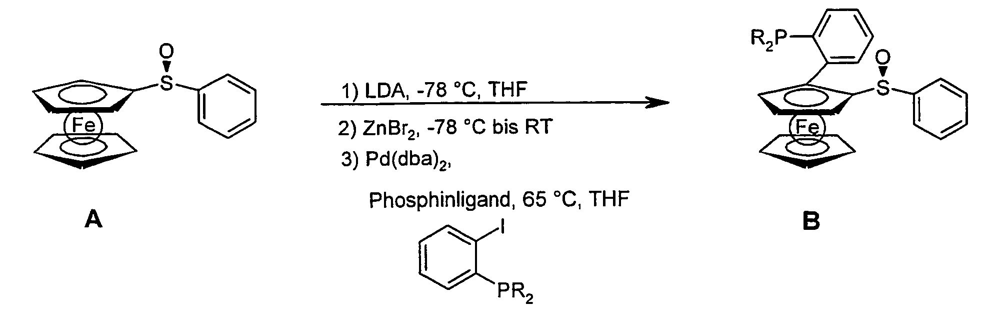

Die Sulfoxidgruppe läßt sich in Gegenwart einer starken Lithiumbase durch die zweite phosphorhaltige Gruppe substituieren. Man gelangt so zu dem erfindungsgemäßen Liganden C.

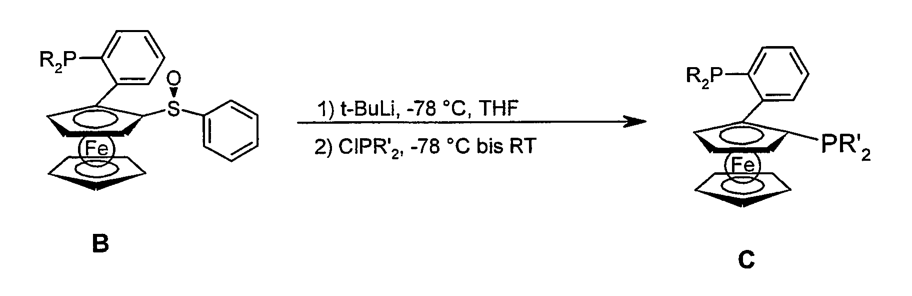

Mit Hilfe dieses Verfahrens können die erfindungsgemäßen bidentaten Organophosphor-Ferrocenylliganden in guten Ausbeuten erhalten werden. Ein weiterer großer Vorteil des Verfahrens ist dessen Toleranz gegenüber Edukten, die am Phenylring oder am Ferrocenylrest substituiert sind. Die Flexibilität des Ligandsystems kann damit leicht variiert werden, wodurch die asymmetrische Induktion kontrollierbar ist.

Unter Verwendung der beanspruchten Liganden können einfach mit Metallen zu Komplexverbindungen umgesetzt werden, die mindestens ein Metallatom oder -ion, vorzugsweise ein Übergangsmetallatom oder -ion, bervorzugt aus der Gruppe Palladium, Platin, Rhodium, Ruthenium, Osmium, Iridium, Kobalt, Nickel, oder/und Kupfer enthalten.

Die Herstellung dieser Metall-Ligand-Komplexverbindungen kann in situ durch Reaktion eines Metallsalzes oder eines entsprechenden Vorkomplexes mit den Liganden der allgemeinen Formel (I) erfolgen. Darüber hinaus kann eine Metall-Ligand-Komplexverbindung durch Reaktion eines Metallsalzes oder eines entsprechenden Vorkomplexes mit den Liganden der allgemeinen Formel (I) und anschließende Isolierung gewonnen werden.

Beispiele für die Metallsalze sind Metallchloride, -bromide, -iodide, -cyanide, -nitrate, -acetate, -acetylacetonate, -hexafluoracetylacetonate, tetrafluoroborate, - perfluoracetate oder -triflate, insbesondere des Palladium, Platins, Rhodium, Ruthenium, Osmium, Iridium, Kobalts, Nickels oder/und des Kupfers.

Beispiele für geeignete Vorkomplexe sind:
Cyclooctadienpalladiumchlorid, Cyclooctadienpalladiumiodid, 1,5-Hexadienpalladiumchlorid, 1,5-Hexadienpalladiumiodid, Bis(dibenzylidenaceton)palladium, Bis(acetonitril)palladium(II)chlorid, , Bis(acetonitril)palladium(II)bromid, Bis(benzonitril)palladium(II)chlorid, Bis(benzonitril)palladium(II)bromid, Bis(benzonitril)palladium(II)iodid, Bis(allyl)palladium, Bis(methallyl)palladium, Allylpalladiumchlorid-Dimer, Methallylpalladiumchlorid-Dimer, Tetramethylethylendiaminpalladiumdichlorid, Tetramethylethylendiaminpalladiumdibromid, Tetramethylethylendiaminpalladiumdiiodid, Tetramethylethylendiaminpalladiumdimethyl, Cyclooctadienplatinchlorid, Cyclooctadienplatiniodid, 1,5-Hexadienplatinchlorid, 1,5-Hexadienplatiniodid, Bis(cyclooctadien)platin, Kalium(ethylentrichloroplatinat), Cyclooctadienrhodium(I)chlorid-Dimer, Norbornadienrhodium(I)chlorid-Dimer, 1,5-Hexadienrhodium(I)chlorid-Dimer, Tris(triphenylphosphan)rhodium(I)chlorid, Hydridocarbonyltris(triphenylphosphan)rhodium(I)chlorid, Bis(cyclooctadien)rhodium(I)perchlorat, Bis(cyclooctadien)rhodium(I)tetrafluorborat, Bis(cyclooctadien)rhodium(I)triflat, Bis(acetonitrilcyclooctadien)rhodium(I)perchlorat, Bis(acetonitrilcyclooctadien)rhodium(I)tetrafluorborat, Bis(acetonitrilcyclooctadien)rhodium(I)triflat, Cyclopentadienrhodium(III)chlorid-Dimer, Pentamethylcyclopentadienrhodium(III)chlorid-Dimer, (cyclooctadien)Ru(allyl)₂, ((cyclooctadien)Ru)₂(acetat)₄, ((Cyclooctadien)Ru)₂(trifluoracetat)₄, RuCl₂(Aren)-Dimer, Tris(triphenylphosphan)ruthenium(II)chlorid, Cyclooctadienruthenium(II)chlorid, OsCl₂(Aren)-Dimer, Cyclooctadieniridium(I)chlorid-Dimer, Bis(cycloocten)iridium(I)chlorid-Dimer, Bis(cyclooctadien)nickel, (Cyclododecatrien)nickel, Tris(norbornen)nickel, Nickeltetracarbonyl, Nickel(II)acetylacetonat, (Aren)kupfertriflat, (Aren)kupferperchlorat, (Aren)kupfertrifluoracetat, Kobaltcarbonyl.

Die Komplexverbindungen auf Basis von ein oder mehreren Metallen der metallischen Elemente, insbesondere aus der Gruppe von Ru, Co, Rh, Ir, Ni, Pd, Pt, Cu können bereits Katalysatoren sein oder zur Herstellung von Katalysatoren auf Basis eines oder mehrerer Metalle der metallischen Elemente, insbesondere aus der Gruppe von Ru, Co, Rh, Ir, Ni, Pd, Pt, Cu verwendet werden.

Neben der in situ Erzeugung von Katalysatoren mit Liganden der Formel (I) im umzusetzenden Reaktionsgemisch kann die Metall-Ligand-Komplexverbindung auch durch Reaktion eines Metallsalzes oder eines entsprechenden Vorkomplexes mit den Liganden der allgemeinen Formel (I) und anschließende Isolierung gewonnen werden. Die Erzeugung einer solchen Komplexverbindung erfolgt bevorzugt in einer Eintopfreaktion unter Rühren bei erhöhter Temperatur. Katalytisch aktive Komplexverbindungen können dabei auch direkt im Reaktionsansatz der geplanten katalytischen Umsetzung erzeugt werden werden.

Die Liganden der allgemeinen Formel (I) können als Liganden an Metallen in asymmetrischen, Metall-katalysierten Reaktionen, wie z. B. der Hydrierung, der Hydroformylierung, in Umlagerungen, der allylischen Alkylierung, der Cyclopropanierung, der Hydrosilylierung, in Hydridübertragungen, in Hydroborierungen, in Hydrocyanierungen, in Hydrocarboxylierungen, in Aldol Reaktionen oder der Heck-Reaktion sowie bei Polymerisationen eingesetzt werden. Sie sind insbesondere für asymmetrische Reaktionen gut geeignet.

Besonders geeignet sind die erfindungsgemäßen Komplexe bei der asymmetrischen Hydrierung von C=C, C=O oder C=N -Bindungen, in denen sie hohe Aktivitäten und Selektivitäten aufweisen sowie in der asymmetrischen Hydroformylierung. Insbesondere erweist es sich hier als vorteilhaft, dass sich die Liganden der allgemeinen Formel (I) durch ihre einfache, breite Abwandelbarkeit sterisch und elektronisch sehr gut auf das jeweilige Substrat und die katalytische Reaktion abstimmen lassen.

### Ausführungsbeispiele

### Allgemeines

Reaktionen luftempfindlicher Verbindungen wurden in einer argongefüllten Glove-Box oder in Standard Schlenkrohren durchgeführt. Lösungsmittel Tetrahydrofuran (THF), Diethylether und Dichlormethan wurden entgast und mittels einer Lösungsmitteltrocknungsanlage (Innovative Technologies) durch Filtration durch eine mit aktiviertem Aluminiumoxid gefüllte Säule absolutiert, Toluol und Pentan wurden zusätzlich durch eine mit einem Kupferkatalysator gefüllte Säule von Sauerstoff befreit.

Die folgenden Beispiele dienen zur Erläuterung der Erfindung. Sie sollen in keiner Weise eine Beschränkung darstellen.

### Beispiel 1: (SFc,SS)-(p-Tolylsulfinyl)-2-[(o-diphenylphosphino)phenyl]-ferrocen

In einem 100 mL Rundkolben mit Argoneinlaß wurde (*S*)-Ferrocenyl-*p*-tolylsulfoxid (793 mg, 2.45 mmol) in THF (15 mL) gelöst und die Lösung auf -78 °C gekühlt. Im Anschluß wurde langsam Lithiumdiisopropylamin-Lösung (1.35 mL, 2.70 mmol; 2.0 M in THF) zugegeben. Nach 30 minütigem Rühren bei -78 °C wurde tropfenweise Zinkbromid-Lösung (2.70 mL, 3.51 mmol; 1.3 M in THF) zugegeben und die Reaktionslösung 1 h lang bei RT gerührt. Das Lösemittel wurde im ÖPV entfernt und der Rückstand in 10 mL THF gelöst. In einem 50 mL Rundkolben mit Argoneinlaß wurden Pd(dba)2 (61.2 mg, 5 mol-%) und Trifurylphosphin (49.2 mg (10 mol-%) in THF (2 mL) gelöst und 10 min. gerührt. Anschließend wurde 1-lod-2-(Diphenylphosphino)-benzen (633 mg, 1.63 mmol) gelöst in THF (3 mL) zugetropft und erneut 10 min. gerührt. Nach Zugabe der Lösung der Zink-Verbindung wurde das Reaktionsgemisch 14 h bei 65 °C gerührt. Anschließend wurde mit ges. Ammoniumchlorid-Lösung gequencht, die organische Phase abgetrennt und die wässrige Phase mit Diethylether extrahiert (3 mal 50 mL). Die vereinigten organischen Phasen wurden mir Natriumchlorid-Lösung (20 mL) gewaschen, über Magnesiumsulfat getrocknet, abfiltriert und das Lösemittel am Rotationsverdampfer abdestilliert. Das Rohprodukt wurde säulenchromatographisch gereinigt (*n*-Pentan/Diethylether 1:2). Das Sulfoxid (707 mg, 1.21 mmol, 74 %) wurde als gelbbrauner Feststoff (Schmp.: 198 °C) erhalten.
¹H-NMR (CDCl3, 300 MHz): 8.29-8.24 (m, 1 H), 7.37-7.06 (m, 14 H), 6.82-6.71 (m, 3 H), 4.40-4.38 (m, 1 H), 4.25-4.23 (m, 1 H), 4.20 (s, 5 H), 4.08-4.05 (m, 1 H), 2.29 (s, 3 H).
¹³C-NMR (CDCl3, 75 MHz): 140.91, 140.22, 140.15, 139.84, 138.34-137.51 (m), 134.39 (d, *J* = 4.6 Hz), 133.94-133.28 (m), 128.96-127.52 (m), 124.74, 94.90, 90.51 (d, *J* = 10.0 Hz, 73.97 (d, *J* = 11.0 Hz), 70.84, 69.80, 67.68, 21.34.
³¹P-NMR (CDCl3, 81 MHz): -13.12.

### Beispiel 2: (S)-2-[(o-diphenylphosphino)phenyl]-1-diphenyl-phosphinoferrocen (Ligand 1)

In einem 50 mL-Rundkolben mit Argoneinlaß wurde Sulfoxid (300 mg, 0.51 mmol) in THF (8 mL) gelöst und die Lösung auf -78 °C gekühlt. Im Anschluß wurde langsam *t*-BuLi (0.64 mL, 1.03 mmol, 1.6 M in Hexan) zugetropft und 5 min. bei -78 °C gerührt. Es wurde tropfenweise Chlordiphenylphosphan (0.32 mL, 1.80 mmol) zugegeben, das Kühlbad entfernt und das Reaktionsgemisch 30 min. bei RT gerührt. Nach Quenchen mit ges. Ammoniumchlorid-Lösung (20 mL) wurde die organische Phase abgetrennt und die wässrige Phase mit Diethylether (2 mal 50 mL) extrahiert. Die vereinigten organischen Phasen wurden mit Natriumchlorid-Lösung (20 mL) gewaschen, über Magnesiumsulfat getrocknet, abfiltriert und das Lösemittel am Rotationsverdampfer abdestilliert. Das Rohprodukt wurde säulenchromatographisch gereinigt (*n*-Pentan/Diethylether 50:1). Das Diphosphan (260 mg, 0.41 mmol, 81 %) wurde als gelber Feststoff (Schmp.: 187 °C) erhalten.
¹H-NMR (CDCl3, 300 MHz): 8.36-8.32 (m, 1 H), 7.56-7.50 (m, 2 H), 7.37-7.27 (m, 9 H), 7.18-7.12 (m, 2 H), 7.08-6.96 (m, 7 H), 6.81-6.77 (m, 1 H), 6.67-6.61 (m, 2 H), 4.28-4.26 (m, 1 H), 4.19-4.16 (m, 1 H), 3.95 (s, 5 H), 3.76-3.75 (m, 1 H).
¹³C-NMR (CDCl3, 75 MHz): 142.74 (d, *J* = 30.8 Hz), 139.36 (d, *J* = 4.1 Hz), 139.19 (d, *J* = 6.7 Hz), 138.39 (d, *J* = 9.4 Hz), 137.94 (d, *J* = 12.9 Hz), 137.39 (d, *J* = 14.3 Hz), 135.35-127.04 (m), 95.67 (dd, J = 24.5, 10.1 Hz), 77.95 (d, J = 8.7 Hz), 74.30 (dd, *J* = 12.3 Hz, 2.9 Hz), 71.31 (d, *J* = 4.1 Hz), 70.25, 68.80.
³¹P-NMR (CDCl3, 81 MHz): -14.35, -21.69.

### Beispiel 3: (S)-2-[(o-diphenylphosphino)phenyl]-1-difurylphosphinoferrocen (Ligand 2)

In einem 50 mL-Rundkolben mit Argoneinlaß wurde Sulfoxid (500 mg, 0.86 mmol) in THF (12 mL) gelöst und die Lösung auf -78 °C gekühlt. Im Anschluß wurde langsam *t*-BuLi (1.07 mL, 1.71 mmol, 1.6 M in Hexan) zugetropft und 5 min. bei -78 °C gerührt. Es wurde tropfenweise Chlordifurylphosphan (600 mg, 2.99 mmol) zugegeben, das Kühlbad entfernt und das Reaktionsgemisch 30 min. bei RT gerührt. Nach Quenchen mit ges. Ammoniumchlorid-Lösung (20 mL) wurde die organische Phase abgetrennt und die wässrige Phase mit Diethylether (2 mal 50 mL) extrahiert. Die vereinigten organischen Phasen wurden mit Natriumchlorid-Lösung (20 mL) gewaschen, über Magnesiumsulfat getrocknet, abfiltriert und das Lösemittel am Rotationsverdampfer abdestilliert. Das Rohprodukt wurde säulenchromatographisch gereinigt (*n*-Pentan/Diethylether 20:1). Das Diphosphan (239 mg, 0.39 mmol, 46 %) wurde als gelber Feststoff (Schmp.: 90 °C) erhalten.
¹H-NMR (CDCl3, 300 MHz): 8.19-8.14 (m, 1 H), 7.67-7.65 (m, 1 H), 7.40-7.33 (m, 2 H), 7.27-6.99 (m, 9 H), 6.83-6.72 (m, 4 H), 6.42-6.40 (m, 1 H), 6.32-6.31 (m, 1 H), 6.15-6.13 (m, 1 H), 4.47-4.46 (m, 1 H), 4.29-4.28 (m, 1 H), 4.12-4.09 (m, 1 H), 3.98 (s, 5 H).
¹³C-NMR (CDCl3, 75 MHz): 152.40 (d, *J* = 11.6 Hz), 152.12 (d, *J* = 4.7 Hz), 146.64 (d, *J* = 2.4 Hz), 146.27 (d, *J* = 3.0 Hz), 142.21 (d, *J* = 1.8 Hz), 141.81 (d, *J* = 1.2 Hz), 138.66 (d, *J* = 13.4 Hz), 138.36 (d, *J* = 14.0 Hz), 137.85 (d, *J* = 12.8 Hz), 134.07-133.02 (m), 128.43-127.24 (m), 120.82 (d, *J* = 25.6 Hz), 118.83 (dd, J = 18.1, 4.1 Hz), 110.75 (d, J = 6.4 Hz), 110.29 (d, J = 4.1 Hz), 96.15 (dd, J = 30.3, 10.6 Hz), 74.51 (d, *J* = 3.5 Hz), 73.99 (dd, *J* = 11.6, 5.5 Hz), 72.37 (d, *J* = 5.3 Hz), 70.08, 69.08.
³¹P-NMR (CDCl3, 81 MHz): -14.01 (d, *J* = 2.3 Hz), -67.18 (d, *J* = 2.3 Hz).

### Beispiele zur asymmetrischen allylischen Alkylierung von 3-Acetoxy-1,3-diphenylpropen

### Beispiel 4: Methyl (S,E)-2-carbomethoxy-3,5-diphenylpent-4-enoat

In einem 50 mL Schlenkgefäß wurden unter Argon Allylpalladiumchlorid (Dimer, 2.3 mg, 1.0 mol-%) und (*S*)-2-[(o-diphenylphosphino)phenyl]-1-diphenyl-phosphinoferrocen (8.1 mg, 2.0 mol-%) bzw. (*S*)-2-[(*o*-diphenylphosphino)phenyl]-1-difurylphosphinoferrocen (7.8 mg, 2.0 mol-%) in Dichlormethan (5 mL) gelöst. Nach 15 minütigem Rühren wurde 3-Acetoxy-1,3-diphenyl-propen (168 mg, 0.64 mmol), *N*,*O*―Bistrimethylsilyl-acetamid (0.31 mL, 1.28 mmol), Dimethylmalonat (0.14 mL, 1.28 mmol) und Kaliumacetat (3.2 mg, 0.03 mmol) zugegeben. Die Reaktionsmischung wurde bei der angegebenen Temperatur für die angegebene Zeit gerührt. Nach Quenchen der Reaktion mit ges. Ammoniumchlorid-Lösung (20 mL) wurde mit Dichlormethan (2 mal 50 mL) extrahiert, die vereinigten organischen Phasen mit Natriumchlorid-Lösung (20 mL) gewaschen und über Magnesiumsulfat getrocknet. Nach dem Abfiltrieren wurde das Lösemittel am Rotationsverdampfer abdestilliert und der erhaltene Rückstand säulenchromatographisch gereinigt (*n*-Pentan/Diethylether 5:1). Das Malonat wurde in Form eines farblosen Öles erhalten. Die erzielten Ergebnisse sind in Tabelle 1 zusammengefasst.
Der Enantiomerenüberschuß wurde durch Hochleistungsflüssigkeitschromatographie (HPLC) ermittelt (HPLC-Anlage der Firma Dionex mit automatischem Probengeber und UV-VIS-Diodenarraydetektor, Säule: OD-H der Firma Daicel Chemical Industries, Eluent: *n*-Heptan/*i*-PrOH 97:3, flow: 0.4 mL/min, detektierte Wellenlänge: 215 nm):
HPLC (OD-H, 3 % *i*-PrOH, 0.4 mL/min, 215 nm): tr/min = 23.63 (*R*), 25.22 (S).
¹H-NMR (CDCl3, 300 MHz): 7.27-7.06 (m, 10 H), 6.40 (d, *J* = 15.8 Hz, 1 H), 6.25 (dd, *J* = 8.4, 15.8 Hz, 1 H), 4.19 (dd, *J* = 8.4, 10.9 Hz,1 H), 3.88 (d, *J* = 10.9 Hz, 1 H), 3.61 (s, 3 H), 3.43 (s, 3 H).
¹³C-NMR (CDCl3, 75 MHz): 168.1, 167.7, 140.2, 136.8, 131.8, 129.1, 128.7, 128.4, 127.8, 127.5, 127.1, 126.3, 57.6, 52.5, 52.3, 49.1.

**Tabelle 1:**

| Ligand | Reaktionszeit [h] | Temperatur [°C] | Ausbeute [%] | ee [%]^{a} |
|---|---|---|---|---|
| 1 | 3 | RT | 97 | 92.0 (*S*) |
| 1 | 4.5 | 0 | 98 | 95.0 (*S*) |
| 1 | 24 | -20 | 76 | 97.5 (*S*) |
| 2 | 22 | RT | 98 | 61.4 (*S*) |

### a) Absolute Konfiguration in Klammern

### Beispiel 5: Methyl (S,E-)-2-carbomethoxy-3,5,5-triphenylpent-4-enoat

In einem 25 mL Schlenkgefäß wurden unter Argon Natriumhydrid (27.7 mg, 0.69 mmol) in THF (1.5 mL) suspendiert, langsam Dimethylmalonat (91 mg, 0.69 mmol) zugegeben und das Reaktionsgemisch 2.5 h bei RT gerührt. In einem 50 mL Schlenkgefäß wurden unter Argon Allylpalladiumchlorid (Dimer, 4.0 mg, 2.5 mol-%) und (*S*)-2-[(*o*-diphenylphosphino)phenyl]-1-diphenyl-phosphinoferrocen (28.8 mg, 10.0 mol-%) in THF (0.5 mL) gelöst. Nach 15 minütigem Rühren wurde 3-Acetoxy-1,1,3-triphenyl-propen (150 mg, 0.46 mmol) zugegeben und die Lösung für 10 min. gerührt. Anschließend wurde die Suspension des Malonates zugesetzt und die Reaktionsmischung bei der angegebenen Temperatur für die angegebene Zeit gerührt. Nach Quenchen der Reaktion mit ges. Ammoniumchlorid-Lösung (20 mL) wurde mit Dichlormethan (2 mal 50 mL) extrahiert, die vereinigten organischen Phasen mit Natriumchlorid-Lösung (20 mL) gewaschen und über Magnesiumsulfat getrocknet. Nach dem Abfiltrieren wurde das Lösemittel am Rotationsverdampfer abdestilliert und der erhaltene Rückstand säulenchromatographisch gereinigt (*n*-Pentan/Diethylether 8:1). Das Produkt wurde in Form eines farblosen Feststoffes erhalten. Die erzielten Ergebnisse sind in Tabelle 2 zusammengefasst.

Der Enantiomerenüberschuß wurde durch Hochleistungsflüssigkeitschromatographie (HPLC) ermittelt (HPLC-Anlage der Firma Dionex mit automatischem Probengeber und UV-VIS-Diodenarraydetektor, Säule: OD der Firma Daicel Chemical Industries, Eluent: *n*-Heptan/*i*-PrOH 99:1, flow: 0.6 mL/min, detektierte Wellenlänge: 215 nm):
HPLC (OD, 1 % *i*-PrOH, 0.6 mL/min, 215 nm): tr/min = 19.72 (S), 26.64 (R).
¹H-NMR (CDCl3, 300 MHz): 7.33-7.09 (m, 13 H), 7.01-6.99 (m, 2 H), 6.27 (d, *J* = 10.8 Hz, 1 H), 4.15 (t, *J* = 10.8 Hz, 1 H), 3.81 (d, *J* = 10.2 Hz, 1 H), 3.61 (s, 3 H), 3.38 (s, 3 H).
¹³C-NMR (CDCl3, 75 MHz): 168.07, 167.65, 143.71, 142.24, 141.21, 139.20, 129.70, 128.65, 128.15, 128.10, 127.80, 127.49, 127.45, 127.43, 126.90, 58.49, 52.48, 52.25, 45.20.

**Tabelle 2:**

| Ligand | Reaktionszeit [h] | Temperatur [°C] | Ausbeute [%] | ee [%]^{a} |
|---|---|---|---|---|
| 1 | 24 | -20 | 76 | 97.5 (*S*) |
| 2 | 22 | RT | 98 | 61.4 (*S*) |

| | | | | |
|---|---|---|---|---|
| a) Absolute Konfiguration in Klammern | | | | |

### Beispiel 6: (-)-(E)-N-(1,3-Diphenyl-2-propenyl)-4-toluolsulfonsäureamid

In einem 25 mL Schlenkgefäß wurden unter Argon Kaliumhydrid (36.5 mg, 0.91 mmol) in THF (4 mL) suspendiert, portionsweise *p*-Toluolsulfonamid (200 mg, 1.17 mmol) zugegeben und das Reaktionsgemisch 2 h bei RT gerührt. In einem 50 mL Schlenkgefäß wurden unter Argon Allylpalladiumchlorid (Dimer, 2.3 mg, 1.0 mol-%) und (*S*)-2-[(*o*-diphenylphosphino)phenyl]-1-diphenyl-phosphino-ferrocen (8.1 mg, 2.0 mol-%) bzw. (*S*)-2-[(*o*-diphenylphosphino)phenyl]-1-difurylphosphinoferrocen (7.8 mg, 2 mol-%) in THF (1 mL) gelöst. Nach 15 minütigem Rühren wurde 3-Acetoxy-1,3-diphenyl-propen (168 mg, 0.64 mmol) und die Suspension des Sulfonamids zugegeben. Die Reaktionsmischung wurde bei der angegebenen Temperatur für die angegebene Zeit gerührt. Nach Quenchen der Reaktion mit ges. Ammoniumchlorid-Lösung (20 mL) wurde mit Dichlormethan (2 mal 50 mL) extrahiert, die vereinigten organischen Phasen mit Natriumchlorid-Lösung (20 mL) gewaschen und über Magnesiumsulfat getrocknet. Nach dem Abfiltrieren wurde das Lösemittel am Rotationsverdampfer abdestilliert und der erhaltene Rückstand säulenchromatographisch gereinigt (*n*-Pentan/Diethylether 2:1). Das Produkt wurde in Form eines farblosen Feststoffes erhalten. Die erzielten Ergebnisse sind in Tabelle 3 zusammengefasst.

Der Enantiomerenüberschuß wurde durch Hochleistungsflüssigkeitschromatographie (HPLC) ermittelt (HPLC-Anlage der Firma Dionex mit automatischem Probengeber und UV-VIS-Diodenarraydetektor, Säule: OD der Firma Daicel Chemical Industries, Eluent: *n*-Heptan/*i*-PrOH 90:10, flow: 0.5 mL/min, detektierte Wellenlänge: 254 nm):
HPLC (OD, 10 % *i*-PrOH, 0.5 mL/min, 254 nm): tr/min = 33.01 (-)-Enantiomer, 48.83 (+)-Enantiomer.
¹H-NMR (CDCl3, 300 MHz): 7.59-7.56 (m, 2 H), 7.20-7.03 (m, 12 H), 6.25 (d, *J* = 15.9 Hz, 1 H), 5.99 (dd, *J* = 15.6 Hz, 6.6 Hz, 1 H), 5.15 (br, d, *J* = 7.5 Hz, 1 H), 5.03 (br, t, *J* = 7.8 Hz, 1 H), 2.22 (s, 3 H).
¹³C-NMR (CDCl3, 75 MHz): 143.18, 139.63, 137.71, 136.03, 132.03, 129.38, 128.65, 128.38, 128.15, 127.82, 127.77, 127.26, 127.01, 126.48, 59.72, 21.32.

**Tabelle 3:**

| Ligand | Reaktionszeit [h] | Temperatur [°C] | Ausbeute [%] | ee [%]^{a} |
|---|---|---|---|---|
| 1 | 48 | -20 | 78 | 97.1 |
| 1 | 2.5 | RT | 96 | 94.0 |
| 2 | 72 | RT | 27 | 70.7 |

### Beispiel 7: (-)-(E)-N-(1,3-Diphenyl-2-propenyl)-N'-benzoylhydrazin

In einem 25 mL Schlenkgefäß wurden unter Argon Kaliumhydrid (36.5 mg, 0.91 mmol) in THF (4 mL) suspendiert, portionsweise Benzhydrazid (159 mg, 1.17 mmol) zugegeben und das Reaktionsgemisch 2 h bei RT gerührt. In einem 50 mL Schlenkgefäß wurden unter Argon Allylpalladiumchlorid (Dimer, 2.3 mg, 1.0 mol-%) und der (*S*)-2-[(*o*-diphenylphosphino)phenyl]-1-diphenyl-phosphino-ferrocen (8.1 mg, 2.0 mol-%) bzw. (*S*)-2-[(*o*-diphenylphosphino)phenyl]-1-difurylphosphinoferrocen (7.8 mg, 2 mol-%) in THF (1 mL) gelöst. Nach 15 minütigem Rühren wurde 3-Acetoxy-1,3-diphenyl-propen (168 mg, 0.64 mmol) und die Suspension des Sulfonamids zugegeben. Die Reaktionsmischung wurde bei der angegebenen Temperatur für die angegebene Zeit gerührt. Nach Quenchen der Reaktion mit ges. Ammoniumchlorid-Lösung (20 mL) wurde mit Dichlormethan (2 mal 50 mL) extrahiert, die vereinigten organischen Phasen mit Natriumchlorid-Lösung (20 mL) gewaschen und über Magnesiumsulfat getrocknet. Nach dem Abfiltrieren wurde das Lösemittel am Rotationsverdampfer abdestilliert und der erhaltene Rückstand säulenchromatographisch gereinigt (*n*-Pentan/Diethylether 2:1). Das Produkt wurde in Form eines farblosen Feststoffes erhalten. Die erzielten Ergebnisse sind in Tabelle 4 zusammengefasst.

Der Enantiomerenüberschuß wurde durch Hochleistungsflüssigkeitschromatographie (HPLC) ermittelt (HPLC-Anlage der Firma Dionex mit automatischem Probengeber und UV-VIS-Diodenarraydetektor, Säule: OD der Firma Daicel Chemical Industries, Eluent: *n*-Heptan/*i*-PrOH 95:5, flow: 0.6 mL/min, detektierte Wellenlänge: 254 nm):
HPLC (OD, 5 % *i*-PrOH, 0.6 mL/min, 254 nm): tr/min = 91.70 (-)-Enantiomer, 106.76 (+)-Enantiomer.
¹H-NMR (CDCl3, 300 MHz): 7.64-7.11 (m, 17 H), 6.60 (d, *J* = 15.6 Hz, 1 H), 6.30 (dd, *J* = 15.6, 7.8 Hz, 1 H), 4.77 (d, *J* = 7.8 Hz, 1 H).
¹³C-NMR (CDCl₃, 75 MHz): 167.39, 140.35, 136.53, 132.79, 132.61, 131.78, 129.40, 128.73, 128.60, 18.50, 127.88, 127.80, 127.74, 126.84, 126.52, 67.17.

**Tabelle 4:**

| Ligand | Reaktionszeit [h] | Temperatur [°C] | Ausbeute [%] | ee [%]^{a} |
|---|---|---|---|---|
| 1 | 24 | -20 | 98 | 95.1 |
| 1 | 1.5 | RT | 96 | 86.1 |
| 2 | 72 | RT | 70 | 78.7 |

### Beispiel 8: Allgemeine Arbeitsvorschrift zur Hydrierung von Acetamidozimtsäuremethylester-Derivaten

Es werden 0.6 µmol Rh(COD)₂OTf und 0.66 µmol Ligand 10 min in 0.5 ml Methanol gerührt. Zu dieser Lösung werden 300 µmol Acetamidozimtsäuremethylester (in 1 ml Methanol) dosiert. Bei Raumtemperatur und unter 5 bar Wasserstoffatmosphäre wird die Reaktionsmischung 16h im Autoklaven gerührt. Das Reaktionsgemisch wird über Kieselgel filtriert und aus dem Rohprodukt wird Enantiomerenüberschuß mittels HPLC bestimmt.

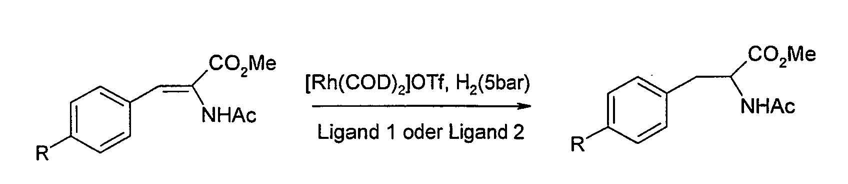

**Tabelle 5:**

| Ligand | R | %ee | Umsatz (%) |
|---|---|---|---|
| 1 | H | 37 | 100 |
| 1 | Me | 13 | 96 |
| 1 | Br | 20 | 98 |
| 2 | H | 14 | 98 |
| 2 | Me | 10 | 98 |

### Beispiel 9: Allgemeine Arbeitsvorschrift zur Hydrierung von β-Enamiden

Es werden 100 µl einer 0.05M DMF-Lösung von [Ru(C₆H₆)Cl₂]₂ (0.5 µmol) und 100 µl einer 0.01 M CH₂Cl₂-Lösung von Ligand 1 (1.0 µmol) 10 min bei 120°C gerührt. Nach dem Abkühlen auf R.T. wird zu dieser Lösung 400 µl einer 0.25M MeOH-Lösung verschiedener β-Enamide gegeben. Bei Raumtemperatur und unter 40 bar Wasserstoffatmosphäre wird die Reaktionsmischung 16-24h im Autoklaven gerührt. Das Reaktionsgemisch wird über Kieselgel filtriert, das Lösemittel entfernt, die Rückstände in Isopropanol/Hexan gelöst, und anschließend wird aus dem Rohprodukt wird Enantiomerenüberschuß mittels HPLC bzw. GC bestimmt (Chiralcel AD Hexan/Isopropanol 95/5 mit 0,5% Diethylamin).

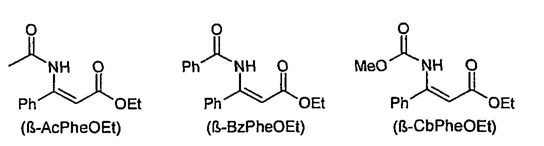

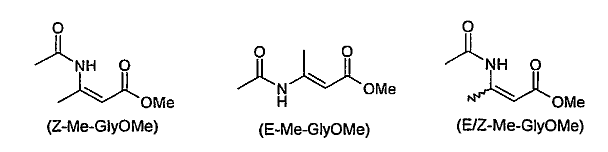

**Tabelle 6:**

| Substrat | Analysebedingungen | Umsatz (%) | ee (%) |
|---|---|---|---|
| β-AcPheOEt | HPLC: Chiralcel OD; Hexan/i-PrOH 93/7 mit 0,5% Trifluoressigsäure | 98 | 60 |
| β-BzPheOEt | HPLC: Chiralcel OD; Hexan/i-PrOH 88,4/11,6 mit 0,5% Trifluoressigsäure; | 99 | 51 |
| β-CbPheOEt | HPLC: Chiralcel OD; Hexan/i-PrOH 83,4/16,6 mit 0,5% Trifluoressigsäure | 79 | 77 |
| Z-Me-GlyOMe | GC: CB-Chiralsil DEX; Isotherm 115 °C | 100 | 47 |
| E-Me-GlyOMe | GC: CB-Chiralsil DEX; Isotherm 115 °C | 100 | 96 |
| Z/E-Me-GlyOMe | GC: CB-Chiralsil DEX; Isotherm 115 °C | 100 | 14 |

### Beispiel 10: Allgemeine Arbeitsvorschrift zur Hydrierung von Ketoestern

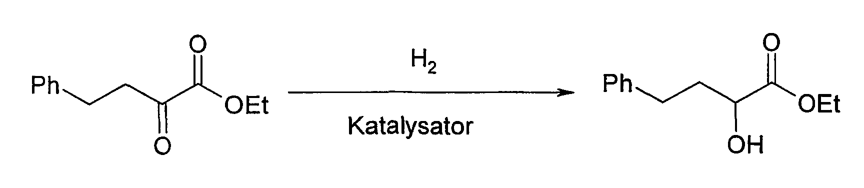

### a) Mit [Ru(C₆H₆)Cl₂]₂:

Es werden 50 µl einer 0.005M DMF-Lösung von [Ru(C₆H₆)Cl₂]₂ (0.25 µmol) und 110 µl einer 0.01 M CH₂Cl₂-Lösung von Ligand 1 (1.1 µmol) 10 min bei 120°C gerührt. Nach dem Abkühlen auf R.T. wird zu dieser Lösung 400 µl einer 0.25M Lösung Ethyl 2-oxo-4-phenylbutyrat zugegeben. Bei 60 °C und unter 50 bar Wasserstoffatmosphäre wird die Reaktionsmischung 16-20h im Autoklaven gerührt. Das Lösemittel wird entfernt, die Rückstände in Isopropanol/Hexan gelöst, durch Kieselgel filtriert und aus dem Rohprodukt wird Enantiomerenüberschuß mittels HPLC bzw. GC bestimmt.

### b) Mit [Rh(COD)₂]BF₄:

Es werden 50 µl einer 0.01 M CH₂Cl₂-Lösung von [Rh(COD)₂]BF₄ (0.5 µmol) und 110 µl einer 0.01 M CH₂Cl₂-Lösung von Ligand 1 (1.1 µmol) bei Raumtemperatur für 15 min gerührt. Zu dieser Lösung werden 400 µl einer 0.25M Lösung Ethyl 2-oxo-4-phenylbutyrat zugegeben Bei 60 °C und unter 50 bar Wasserstoffatmosphäre wird die Reaktionsmischung 16-20h im Autoklaven gerührt. Die Lösemittel wurden abgedampft, Rückstände in Isopropanol/Hexan gelöst, durch Kieselgel filtriert und aus dem Rohprodukt wird Enantiomerenüberschuß mittels HPLC bzw. GC bestimmt.

### c) Mit Bis-2-(methylallyl)-cycloocta-1,5-dien-ruthenium(II) [Ru(metallyl)₂COD]

Es werden 50 µl einer 0.002M CH₂Cl₂-Lösung von Bis-2-(methylallyl)-cycloocta-1,5-dien-ruthenium(II) (0.2 µmol) und 110 µl einer 0.01 M CH₂Cl₂-Lösung von Ligand 1 (1.1 µmol) 10 min bei Raumtemperatur gerührt. Dann wurden 50 µl einer 0.04M CH₂Cl₂-Lösung von HBF₄-OEt₂ zugegeben und für 15 min gerührt. Anschließend wurde zu dieser Lösung 400 µl einer 0.25M CH₂Cl₂-Lösung von Keton zugegeben. Bei Raumtemperatur und unter 10 bar Wasserstoffatmosphäre wird die Reaktionsmischung 16-20h im Autoklaven gerührt. Die Lösemittel wurden abgedampft, Rückstände in Isopropanol/Hexan gelöst, durch Kieselgel filtriert und aus dem Rohprodukt wird Enantiomerenüberschuß mittels HPLC bzw. GC bestimmt.

**Tabelle 7:**

| Lösemittel | Metalkomplex | Umsatz (%) | ee (%) |
|---|---|---|---|
| CH₂Cl₂ | Ru(metallyl)₂COD | 9 | 35 |
| CH₂Cl₂ | [Rh(COD)₂]BF₄ | 5 | 10 |
| CH₂Cl₂ | [Ru(C₆H₆)Cl₂]₂ | 100 | 89 |
| THF | [Rh(COD)₂]BF₄ | 22 | 26 |
| THF | [Ru(C₆H₆)Cl₂]₂ | 100 | 88 |
| MeOH | [Ru(C₆H₆)Cl₂]₂ | 48 | 57 |

## Patentansprüche

1. Bidentate Organophosphorliganden der Formel (I), 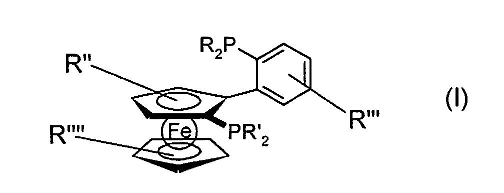 worin
R, R' unabhängig voneinander für jeden der beiden Substituenten R und unabhängig voneinander für jeden der beiden Substituenten R' einen Rest ausgewählt aus der Gruppe C₁-C₂₄ Alkyl, C₂-C₂₄ Alkenyl, C₃-C₈ Cycloalkyl, C₃-C₈ Cycloalkenyl, C₆-C₁₄ Aryl, Phenyl, Naphthyl, Fluorenyl, Furfuryl, 1-Adamantyl, C₂-C₁₃ Heteroaryl, wobei die Zahl der Heteroatome aus der Gruppe N, O, S, 1-4 betragen kann, darstellen können und
bei denen die genannten Substituenten R und R' jeweils ein- oder mehrfach substituiert sein können, wobei diese Substituenten unabhängig voneinander aus der Gruppe C₁-C₁₂ Alkyl, C₂-C₁₂ Alkenyl, C₁-C₁₀ Haloalkyl, C₃-C₈ Cycloalkyl, C₃-C₈ Cycloalkenyl, C₂-C₉ Heteroalkyl, C₁-C₉ Heteroalkenyl, C₆-C₁₄ Aryl, Phenyl, Naphthyl, Fluorenyl, C₂-C₇ Heteroaryl, wobei die Zahl der Heteroatome aus der Gruppe N, O, S, 1-4 betragen kann, C₁-C₁₀ Alkoxy, C₁-C₉ Trihalomethylalkyl, Trifluormethyl, Trichlormethyl, Fluoro, Chloro, Hydroxy, C₁-C₈ substituierte Amino der Formen mono-, di-, tri- C₁-C₈-Alkylamino oder C₂-C₈ Alkenylamino oder mono-, di-, tri- C₆-C₈ Arylamino oder Carboxyl, Carboxylato der Form COOR'"", wobei R'"" ein einwertiges Kation oder ein C₁-C₈ Alkyl darstellt, C₁-C₈-Acyloxy, Tri- C₁-C₆ Alkylsilyl, ausgewählt werden können, und wobei zwei dieser Substituenten auch verbrückt sein können und worin
R", R"',R"" unabhängig voneinander für jeden der Substituenten R", R"' oder R"" einen Rest ausgewählt aus der Gruppe Wasserstoff, C₁-C₂₄Alkyl, C₂-C₂₄ Alkenyl, C₃-C₈ Cycloalkyl, C₃-C₈ Cycloalkenyl, C₁-C₁₀ Alkoxy, C₁-C₉ Trihalomethylalkyl, Trifluormethyl, Trichlormethyl, Fluoro, Chloro, Hydroxy, C₁-C₈ substituierte Amino der Formen mono-, di-, tri- C₁-C₈-Alkylamino oder C₂-C₈ Alkenylamino oder mono-, di-, tri- C₆-C₈ Arylamino oder Carboxyl, Carboxylato der Form COOR'"", wobei R'"" ein einwertiges Kation oder ein C₁-C₈ Alkyl darstellt, C₁-C₈-Acyloxy, Tri- C₁-C₆ Alkylsilyl, darstellen können, und wobei zwei dieser Substituenten auch verbrückt sein können.

2. Bidentate Organophosphorliganden nach Anspruch 1, **dadurch gekennzeichnet, daß** R und R' unabhängig voneinander Phenyl, Furfuryl, 3,5-Dimethylphenyl, 4-Methylphenyl, 2-Methylphenyl, 4-Methoxyphenyl, 3,5-Bis(trifluormethyl)phenyl, Cyclohexyl, tert. Butyl, n-Butyl, 2-Propyl, Ethyl, Methyl oder 1-Adamantyl sein können.

3. Verbindungen nach Anspruch 1, **dadurch gekennzeichnet, dass** die Verbindungen der Formel (I) optisch aktiv sind.

4. Verbindungen nach Anspruch 1, **dadurch gekennzeichnet, dass** die Verbindungen der Formel (I) enantiomerenangereichert sind.

5. Komplexverbindung enthaltend mindestens einen Liganden nach einem der Ansprüche 1 bis 4 und mindestens ein Übergangsmetall.

6. Komplexverbindungen gemäß Anspruch 5 **dadurch gekennzeichnet, dass** die Komplexverbindungen mindestens ein Übergangsmetallatom oder -ion ausgewählt aus der Gruppe Palladium, Platin, Rhodium, Ruthenium, Osmium, Iridium, Kobalt, Nickel, oder/und Kupfer enthält.

7. Komplexverbindungen gemäß einem der Ansprüche 5 oder 6 erhältlich durch Reaktion eines Metallsalzes oder eines entsprechenden Vorkomplexes mit den Liganden der allgemeinen Formel (I).

8. Verwendung einer Komplexverbindung nach den Ansprüchen 5 bis 7 als Katalysator für asymmetrische Reaktionen oder Polymerisationen.

9. Verwendung einer Komplexverbindung nach den Ansprüchen 5 bis 7 als Katalysator für asymmetrische Hydrierungen, Hydroformylierungen, Umlagerungen, allylische Alkylierungen, Cyclopropanierungen, Hydrosilylierungen, Hydridübertragungsreaktionen, Hydroborierungen, Hydrocyanierungen, Hydrocarboxylierungen, Aldol Reaktionen oder Heck-Reaktionen.

10. Verfahren zur Herstellung von Liganden der Formel (I) gemäß Anspruch 1 umfassend die folgenden Syntheseschritte:
i. Lithiierung und Transmetallierung von chiralem Ferrocenyl-sulfoxid in Gegenwart einer Lithiumbase und in Gegenwart von ZnBr₂
ii. Umsetzung des Ferrocenyl-sulfoxid A mit 1-lod-Phosphinobenzens in Gegenwart eines Palladiumkatalysators und
iii. Substitution der Sulfoxidgruppe durch ein HalPR'₂ in Gegenwart einer starken Lithiumbase, wobei Hal für ein Cl oder Br stehen kann.

## Claims

1. Bidentate organophosphorus ligands of the formula (I), 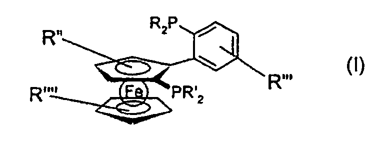 where
R, R' can each be, independently of one another for each of the two substituents R and independently of one another for each of the two substituents R', a radical selected from the group consisting of C₁-C₂₄ alkyl, C₂-C₂₄ alkenyl, C₃-C₈ cycloalkyl, C₃-C₈ cycloalkenyl, C₆-C₁₄ aryl, phenyl, naphthyl, fluorenyl furfuryl, 1-adamantyl, C₂-C₁₃ heteroaryl, with the number of heteroatoms from the group consisting of N, O, S being able to be 1-4, and
the specified substituents R and R' can each be monosubstituted or polysubstituted by substituents which can be selected independently from the group consisting of C₁-C₁₂ alkyl, C₂-C₁₂ alkenyl, C₁-C₁₀ haloalkyl, C₃-C₈ cycloalkyl, C₃-C₈ cycloalkenyl, C₂-C₉ heteroalkyl, C₁-C₉ heteroalkenyl, C₆-C₁₄ aryl, phenyl, naphthyl, fluorenyl, C₂-C₇ heteroaryl, with the number of heteroatoms from the group consisting of N, O, S being able to be 1-4, C₁-C₁₀ alkoxy, C₁-C₉ trihalomethylalkyl, trifluoromethyl, trichloromethyl, fluoro, chloro, hydroxy, C₁-C₈ substituted amino of the types mono-, di-, tri-C₁-C₈-alkylamino or C₂-C₈ alkenylamino or mono-, di-, tri-C₆-C₈ arylamino or carboxyl, carboxylate of the formula COOR'"", where R'"" is a monovalent cation or a C₁-C₈ alkyl, C₁-C₈ acyloxy, tri-C₁-C₆ alkylsilyl, and two of the substituents can also be branched and
R", R''', R"" can each be, independently of one another for each of the substituents R", R'" or R"", a radical selected from the group consisting of hydrogen, C₁-C₂₄ alkyl, C₂-C₂₄ alkenyl, C₃-C₈ cycloalkyl, C₃-C₈ cycloalkenyl, C₁-C₁₀ alkoxy, C₁-C₉ trihalomethylalkyl, trifluoromethyl, trichloromethyl, fluoro, chloro, hydroxy, C₁-C₈ substituted amino of the types mono-, di-, tri-C₁-C₈-alkylamino or C₂-C₈ alkenylamino or mono-, di-, tri-C₆-C₈ arylamino or carboxyl, carboxylate of the formula COOR'"", where R'"" is a monovalent cation or a C₁-C₈ alkyl, C₁-C₈-acyloxy, tri-C₁-C₆ alkylsilyl, and two of the substituents may also be bridged.

2. Bidendate organophosphorus ligands according to Claim 1, **characterized in that** R and R' can each be, independently of one another, phenyl, furfuryl, 3,5-dimethylphenyl, 4-methylphenyl, 2-methylphenyl, 4-methoxyphenyl, 3,5-bis-(trifluoromethyl)phenyl, cyclohexyl, tert-butyl, n-butyl, 2-propyl, ethyl, methyl or 1-adamantyl.

3. Compounds according to Claim 1, **characterized in that** the compounds of the formula (I) are optically active.

4. Compounds according to Claim 1, **characterized in that** the compounds of the formula (I) are enantiomerically enriched.

5. Complex containing at least one ligand according to any of Claims 1 to 4 and at least one transition metal.

6. Complexes according to Claim 5, **characterized in that** the complexes contain at least one transition metal atom or ion selected from the group consisting of palladium, platinum, rhodium, ruthenium, osmium, iridium, cobalt, nickel and copper.

7. Complexes according to either Claim 5 or 6 obtainable by reaction of a metal salt or an appropriate precomplex with the ligands of the general formula (I).

8. Use of a complex according to any of Claims 5 to 7 as catalyst for asymmetric reactions or polymerizations.

9. Use of a complex according to any of Claims 5 to 7 as catalyst for asymmetric hydrogenations, hydroformylations, rearrangements, allylic alkylations, cyclopropenations, hydrosilylations, hydride transfer reactions, hydroborations, hydrocyanations, hydrocarboxylations, aldol reactions or Heck reactions.

10. Process for preparing ligands of the formula (I) according to Claim 1, which comprises the following synthesis steps:
i. lithiation and transmetallation of chiral ferrocenyl sulphoxide in the presence of a lithium base and in the presence of ZnBr₂
ii. reaction of the ferrocenyl sulphoxide A with 1-iodophosphinobenzene in the presence of a palladium catalyst and
iii. replacement of the sulphoxide group by an HalPR'₂ in the presence of a strong lithium base, where Hal can be Cl or Br.

## Revendications

1. Ligands organophosphorés bidentés de la formule (I) 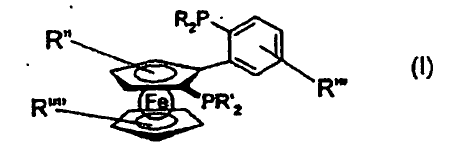 dans laquelle
R, R' peuvent représenter indépendamment l'un de l'autre pour chacun des deux substituants R et indépendamment l'in de l'autre pour chacun des deux substituants R' un radical choisi dans le groupe des radicaux alkyle en C₁ à C₂₄, alcényle en C₂ à C₂₄, cycloalkyle en C₃ à C₈, cycloalcényle en C₃ à C₈, aryle en C₆ à C₁₄, phényle, naphtyle, fluorényle, furfuryle, 1-adamantyle, hétéroaryle en C₂ à C₁₃, où le nombre des hétéroatomes du groupe de N, O, S peut valoir de 1 à 4, et
où les substituants R et R' mentionnés peuvent chacun être substitués une ou plusieurs fois, ces substituants pouvant être choisis indépendamment les uns des autres dans le groupe formé par des radicaux alkyle en C₁ à C₁₂, alcényle en C₂ à C₁₂, halogénoalkyle en C₁ à C₁₀, cycloalkyle en C₃ à C₈, cycloalcényle en C₃ à C₈, hétéroalkyle en C₂ à C₉, hétéroalcényle en C₁ à C₉, aryle en C₆ à C₁₄, phényle, naphtyle, fluorényle, hétéroaryle en C₂ à C₇, où le nombre des hétéroatomes du groupe de N, O, S, peut valoir de 1 à 4, alcoxy en C₁ à C₁₀, trihalogénométhylalkyle en C₁ à C₉, trifluorométhyle, trichlorométhyle, fluoro, chloro, hydroxy, amino substitué en C₁ à C₈ des formes mono-, di-, trialkylamino en C₁ à C₈ ou alcénylamino en C₂ à C₈ ou mono-, di-, triarylamino en C₆ à C₈ ou carboxyle, carboxylato de la forme COOR'""où R'"" représente un cation monovalent ou un alkyle en C₁ à C₈, acyloxy en C₁ à C₈, tri-(C₁-C₆)alkylsilyle, et où deux de ces substituants peuvent aussi être pontés et dans laquelle
R", R'", R"" peuvent représenter indépendamment les uns des autres pour chacun des substituants R", R"' et R"" un radical choisi dans le groupe formé par l'hydrogène et des radicaux alkyle en C₁ à C₂₄, alcényle en C₂ à C₂₄, cycloalkyle en C₃ à C₈, cycloalcényle en C₃ à C₈, alcoxy en C₁ à C₁₀, trihalogénométhylalkyle en C₁ à C₉, trifluorométhyle, trichlorométhyle, fluoro, chloro, hydroxy, amino substitué en C₁ à C₆ des formes mono-, di, tri(C₁-C₈) alkylamino ou (C₂-C₈)alcénylamino ou mono-, di-, tri-(C₆-C₈)arylamino ou carboxyle, carboxylato de la forme COOR'"", où R'"" représente un cation monovalent ou un alkyle en C₁ à C₈, acyloxy en C₁ à C₈, tri-(C₁-C₆)alkylsilyle, et où deux de ces substituants peuvent aussi être pontés.

2. Ligands organophosphorés bidentés selon la revendication 1, **caractérisés en ce que** R et R' peuvent être, indépendamment l'un de l'autre, des radicaux phényle, furfuryle, 3,5-diméthylphényle, 4-méthylphényle, 2-méthylphényle, 4-méthoxyphényle, 3,5-bis(trifluorométhyl)phényle, cyclohexyle, tert.-butyle, n-butyle, 2-propyle, éthyle, méthyle ou 1-adamantyle.

3. Composés selon la revendication 1, **caractérisés en ce que** les composés de la formule (I) sont optiquement actifs.

4. Composés selon la revendication 1, **caractérisés en ce que** les composés de la formule (I) sont énantiomériquement enrichis.

5. Composé complexe contenant au moins un ligand selon l'une quelconque des revendications 1 à 4 et au moins un métal de transition.

6. Composés complexes selon la revendication 5, **caractérisés en ce que** les composés complexes contiennent au moins un atome ou un ion de métal de transition choisi dans le groupe formé par le palladium, le platine, le rhodium, le ruthénium, l'osmium, l'iridium, le cobalt, le nickel et/ou le cuivre.

7. Composés complexes selon l'une quelconque des revendications 5 ou 6, que l'on peut obtenir par réaction d'un sel métallique ou d'un pré-complexe correspondant avec le ligand de la formule générale (I).

8. Utilisation d'un composé complexe selon les revendications 5 à 7 en tant que catalyseur pour des réactions ou des polymérisations asymétriques.

9. Utilisation d'un composé complexe selon les revendications 5 à 7 en tant que catalyseur pour des hydrogénations, hydroformylations, réarrangements alkylations allyliques, cyclopropanations, hydrosilylations, réactions de transfert d'hydrures, hydroborations, hydrocyanations, hydrocarboxylations, réactions aldoliques ou réactions de Heck asymétriques.

10. Procédé de préparation de ligands de la formule (I) selon la revendication 1, comprenant les étapes de synthèse suivantes :
i. Lithiation et transmétallation de sulfoxyde de ferrocényle chiral en présence d'une base au lithium et de ZnBr₂,
ii. Réaction du sulfoxyde de ferrocényle A avec du 1-iodo-phosphinobenzène en présence d'un catalyseur de palladium et
iii. Substitution du groupe sulfoxyde par un HalPR'₂ en présence d'une base forte au lithium, Hal pouvant représenter un Cl ou un Br.
